# EUROPEAN PATENT SPECIFICATION

(11) **EP 4 282 056 B1**
(45) Date of publication and mention of the grant of the patent: **18.03.2026**
(21) Application number: 22700400.9
(22) Date of filing: 12.01.2022
(51) Int. Cl.: H02K 7/116, H02K 5/04, H02K 5/08

(54) **WIPER MOTOR**
WISCHERMOTOR
MOTEUR D'ESSUIE-GLACE

(30) Priority: 19.01.2021 DE 102021101024
(43) Date of publication of application: 29.11.2023
(73) Proprietor: VALEO SYSTEMES D'ESSUYAGE, 78322 Le Mesnil Saint Denis (FR)
(72) Inventor: SCHAEUBLE, Michael, 74321 Bietigheim-Bissingen (DE); KAPITZA, Harald, 74321 Bietigheim-Bissingen (DE)
(74) Representative: Valeo Visibility
(86) International application number: PCT/EP2022/050540
(87) International publication number: WO 2022/157047

(56) References cited:
- EP-A1- 3 404 806
- CN-U- 204 391 976
- JP-B2- 5 758 654
- US-A1- 2005 109 155
- US-A1- 2013 180 357

## Description

### Technical field

The invention relates to a wiper motor which serves as a constituent part of a wiper device for cleaning a vehicle glass. In particular, the invention relates to a configuration of the wiper motor that, by contrast with the prior art, allows simpler construction and mounting of a gearbox cover on the gearbox housing of the wiper motor.

Prior art (JP 5 758654 B2, EP 3 404 806 A1, US 2013/180357 A1, CN 204 391 976)

A wiper motor having the features of the preamble of Claim 1 is known from practice. Such a wiper motor is distinguished by a gearbox housing which comprises a pot-shaped main body whose opening can be closed by a gearbox cover in order for the gear mechanism arranged in the gearbox housing to be protected from ingress of media or dirt.

In this context, it is already known that, to avoid screw connections or to reduce the number of components and to simplify the mounting process, a plurality of latching connections can be provided between the main body of the gearbox housing and the gearbox cover that are formed when axially joining the gearbox cover to the main body of the gearbox housing. It is essential here, moreover, that the gearbox cover is arranged in a certain rotational angle position with respect to a longitudinal axis of the gearbox housing that is customarily aligned with an output shaft of the gear mechanism arranged in the gearbox housing. This rotational angle position should in particular also allow a play-free arrangement of the gearbox cover on the gearbox housing with respect to a circumferential direction about said longitudinal axis. For this purpose, the known wiper motor comprises, in addition to the latching connections, centring means which consist of at least one centring pin on the gearbox cover that interacts with a mating centring opening in an extension on the gearbox housing. These centring means thus constitute, in addition to the latching connections, additional components or elements which necessitate additional installation space and material requirement on the main body and the gearbox cover of the gearbox housing.

### Disclosure of the invention

The wiper motor according to the invention having the features of Claim 1 has the advantage that the centring means do not require any additional installation space nor any additional material requirement on the gearbox housing and separate components to form the centring means. The idea on which the invention is based is to form the centring means as an integral constituent part of the latching connections, to be precise in combination with a particular arrangement of the latching connections on the gearbox housing.

Specifically, in order to achieve the aforementioned advantages, the teaching of the invention proposes that the wiper motor be configured in such a way that the centring means are formed by two latching connections, that the centring means of each of the two latching connections are formed by in each case a first bearing face on the first latching element and a second bearing face on the second latching element, that the first bearing faces and the second bearing faces, in the joined state between the main body of the gearbox housing and the housing cover, bear against one another as viewed in the circumferential direction about a longitudinal axis of the gearbox housing, and that the first bearing faces and the second bearing faces, as viewed with respect to a direction of rotation about the longitudinal axis, are in each case arranged on the same side of the first latching elements and of the second latching elements.

In particular, the last-mentioned feature of the geometric assignment of the bearing faces on the latching elements makes it possible to ensure that the gearbox cover is arranged relative to the main body of the gearbox housing so as to be rotational angle play-free with respect to a longitudinal axis of the gearbox housing.

Advantageous developments of the wiper motor according to the invention are set forth in the dependent claims.

To optimize the freedom of rotational angle play by the centring means, it is advantageous if the two latching connections serving to form the centring means are arranged at opposite regions, that is to say arranged with an offset from one another in particular by approximately 180°, with respect to the longitudinal axis of the gearbox housing that extends parallel to the joining direction between the gearbox cover and the main body of the gearbox housing.

To increase the stiffness or strength of the elastically deformable latching element and to achieve a deformation of the first latching element that occurs only in one direction during the joining operation, there is provision, moreover, that the first latching element comprises two webs which are connected to one another by a cross-web and which delimit a preferably rectangular cutout into which the second latching element projects in the joined state of the gearbox housing.

For the joining operation, it is, moreover, particularly advantageous in the last-mentioned configuration if the first bearing face is designed to be lengthened outside the cutout to form a guide face. As a result, guiding and centring of the latching elements of the centring means with respect to one another already takes place during the axial joining of the gearbox housing.

In order, during the mounting operation, to form the latching connections without the risk of damage to the latching elements and with a limited mounting force in the joining direction, it is, moreover, advantageous if the second latching element comprises a run-on slope against which the first latching element bears during the joining operation of the gearbox housing, with said latching element being elastically deformed. As a result, continuous (elastic) deformation of the first latching element occurs without force or stress peaks.

Further improved centring between the main body of the gearbox housing and the gearbox cover with respect to the longitudinal axis in the case of a guide face designed to be extended to outside the cutout is achieved if the guide face has a lateral bevel for interacting with the second bearing face on the second latching element.

In order to form a secure and reliable, sealed connection as viewed over the entire circumference between the (pot-shaped) main body of the gearbox housing and the gearbox cover, there is, moreover, preferably provision that at least one additional latching connection between the main body and the gearbox cover is provided, and that the at least one additional latching connection, in the joined state of the gearbox housing, has a rotational angle play with respect to a plane extending perpendicularly to the joining direction. Expressed in other words, this means that the at least one additional latching connection does not serve for the rotational angle play-free arrangement of the gearbox cover on the main body of the gearbox housing, but only for axially securing and bracing the gearbox cover. This also avoids a situation in which a geometrically overdetermined geometry between the main body and the gearbox cover is formed that otherwise could be compensated for only by highly accurate production of the latching elements on the main body of the gearbox housing and the gearbox cover.

Particularly in conjunction with the gearbox cover being formed from plastic, it is advantageous if the first latching element is arranged on the gearbox cover, and the second latching element is arranged on the main body.

A further preferred geometric configuration provides that the cutout has a first width on the first latching element that is greater than a second width of the second latching element, with the result that, in the joined state of the gearbox housing, a gap is formed between the cutout in the first latching element and the second latching element on the side facing away from the bearing faces.

Further advantages, features and details of the invention will emerge from the following description of preferred embodiments of the invention and also from the drawings.

### Brief description of the drawings

- Fig. 1: shows a wiper motor in a bottom view,
- Fig. 2: shows an operation of joining a gearbox cover to a gearbox housing of the wiper motor according to Fig. 1 in a perspective illustration,
- Fig. 3: shows a subregion of the wiper motor according to Fig. 1 with a joined gearbox housing,
- Fig. 4: shows a side view of a first latching connection for forming centring means between the gearbox cover and the gearbox housing, and
- Fig. 5: shows a side view of a second latching connection between the gearbox cover and the gearbox housing, with the second latching connection serving for axially securing the gearbox cover.

### Embodiments of the invention

Identical elements or elements having an identical function are denoted by the same reference numbers in the figures.

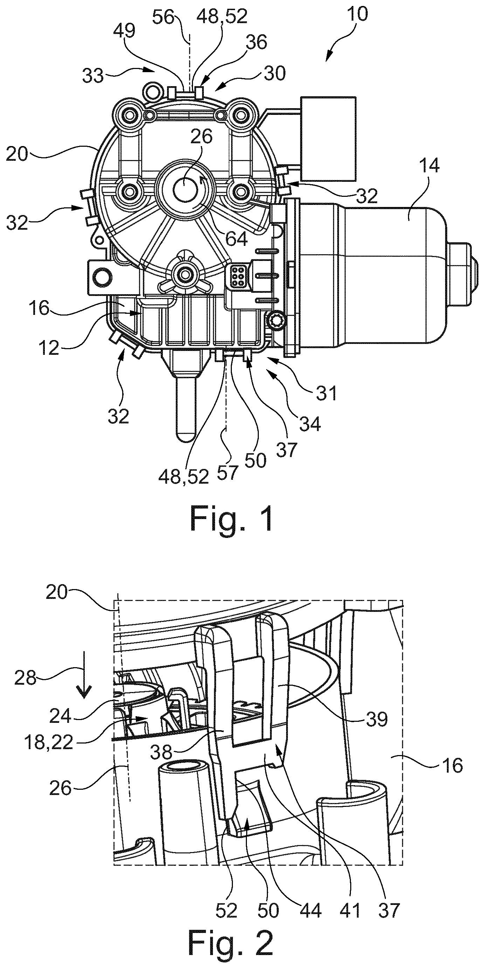

In Fig. 1 there is shown a wiper motor 10 as a constituent part of a wiper device for cleaning a vehicle glass (not shown). Here, the wiper motor 10 acts indirectly, via a wiper linkage, or directly on a wiper arm on which in turn a wiper blade for cleaning the vehicle glass is arranged or fastened.

The wiper motor 10 comprises a gearbox housing 12 onto which an electric motor is flanged with its motor housing 14. The gearbox housing 12 consists of at least two parts, namely a preferably pot-shaped main body 16 as first part whose opening 18 can be closed by a gearbox cover 20 as second part. The gearbox housing 12 forms, in the joined state, a closed receiving space 22 for receiving a gear mechanism (not shown in detail) which acts on an output shaft 24 (Fig. 2) which is connected, at least indirectly, to the wiper arm or the wiper blade. The output shaft 24 simultaneously forms a longitudinal axis 26 on the gearbox housing 12, with a joining direction 28 extending parallel to or in alignment with the longitudinal axis 26 when mounting the gearbox cover 20 on the main body 16. The longitudinal axis 26 and the joining direction 28 extend perpendicularly to the drawing plane of Fig. 1.

Along the outer circumference of the gearbox housing 12 there are formed or arranged, according to the illustration of Fig.1, two first latching connections 30, 31 and, by way of example, three second or further latching connections 32. Furthermore, the two first latching connections 30, 31, when viewing the longitudinal axis 26, are arranged at opposite rotational angle regions 33, 34, that is to say offset from one another by approximately 180°, on the gearbox housing 12.

The two first latching connections 30, 31 serve for the play-free positioning or arrangement of the gearbox cover 20 relative to the main body 16 in a circumferential direction extending concentrically around the longitudinal axis 26, that is to say to avoid a rotational angle play about the longitudinal axis 26. Furthermore, the two first latching connections 30, 31 also serve to fix the gearbox cover 20 on the main body 16 in the axial direction, that is to say in the direction of the longitudinal axis 26. By contrast, the three second latching connections 32 serve exclusively for axially securing the gearbox cover 20 on the main body 16, with the result that a rotational angle play with respect to the longitudinal axis 26 can occur at the second latching connections 32 should the first latching connections 30 not be present or formed.

The two first, preferably identically formed, latching connections 30, 31 each comprise a first latching element 36, 37 arranged on the gearbox cover 20. Here, the first latching element 36, 37 is integrally or monolithically formed on the gearbox cover 20, which consists of plastic and takes the form of an injection-moulded part. The first latching element 36, 37 is arranged on the gearbox cover 20 so as to be elastically deformable in a direction extending perpendicularly to the longitudinal axis 26 and comprises two webs 38, 39 which, in the exemplary embodiment, each have a rectangular cross section and extend parallel to one another. On the side facing away from the gearbox cover 20, the two webs 38, 39 are connected to one another by means of a cross-web 41. The two webs 38, 39 along with the cross-web 41 delimit, together with the gearbox cover 20, a rectangular cutout 42 having an inner width B.

The one web 38 is designed to be lengthened outside the cutout 42 on the side facing away from the gearbox cover 20 and facing the cutout 42 to form a guide face 44. The guide face 44 transitions, moreover, into a bevel 46 arranged at an angle α. Here, the bevel 46 is situated on the side facing the web 39. Within the cutout 42, the web 38 of the first latching element 36, 37 forms a first bearing face 48 which extends parallel to and in alignment with the guide face 44.

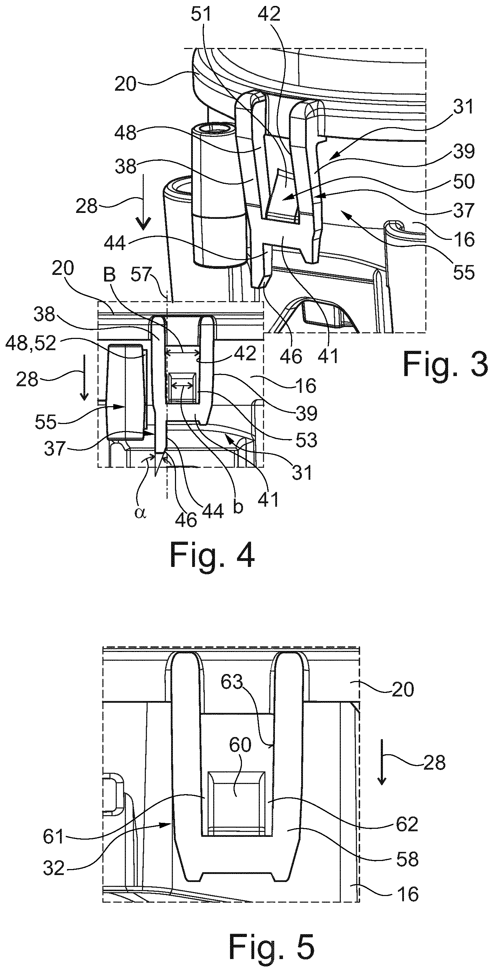

According to the illustration of Figs. 3 and 4, with the first latching connections 30, 31 formed, a second latching element 49, 50 of the first latching connection 30, 31 is received within the cutout 42. The second latching element 49, 50, which is integrally formed or realized on the main body 16, comprises an obliquely extending run-on slope 51. Furthermore, the second latching element 49, 50 has an outer width b which is less than the inner width B of the cutout 42. On the side facing the first bearing face 48, the second latching element 49, 50 has a second bearing face 52 interacting with the first bearing face 48.

The first latching elements 36, 37 form, together with the second latching elements 49, 50, centring means 55 for avoiding a rotational angle play about the longitudinal axis 26, with the centring means 55 in each case being formed by a first bearing face 48 on the first latching element 36, 37 and a second bearing face 52, interacting with the first bearing face 48, on the second latching element 49, 50.

Furthermore, it is essential that, with the gearbox housing 12 joined, that is to say with the first latching connections 30, 31 formed, the first bearing faces 48 and the second bearing faces 52 are arranged in bearing contact or in a play-free manner on the gearbox housing 12 on mutually facing sides of the first latching elements 36, 37 and of the second latching elements 49, 50, and that the first bearing faces 48 and the second bearing faces 52, when viewed with respect to a direction of rotation about the longitudinal axis 26 extending, for example, in the clockwise direction and indicated by the arrow 64 in Fig. 1, are in each case arranged on the same side of the first latching elements 36, 37 and of the second latching elements 49, 50. Furthermore, a gap 53 (Fig. 4) is formed, on the side facing away from the bearing faces 48, 52, between the first latching element 36, 37 and the second latching element 49, 50. The consequence of such an arrangement is that the gearbox cover 12 is arranged play-free with respect to a circumferential direction about the longitudinal axis 26 in a rotational angle play-free manner relative to the main body 16. The arrangement of the first bearing faces 48 relative to the second bearing faces 52 on the two first latching connections 30, 31 is illustrated in Fig. 1 by the planes 56, 57.

By contrast to the two first latching connections 30, 31, when forming the, by way of example, three second latching connections 32, which likewise comprise elastically deformable first latching elements 58 on the gearbox cover 20 and (rigid) second latching elements 60 on the main body 16 in a corresponding manner to the first latching connections 30, 31, there is formed between the respective latching elements 58 and 60, with the second latching connections 32 formed, and as viewed in the longitudinal direction, in each case a gap 61, 62 in the region of the cutouts 63 (Fig. 5), that is to say a rotational angle play about the longitudinal axis 26 is present.

During the operation of joining the gearbox cover 20 to the main body 16 of the gearbox housing 12, the latching connections 30, 31 and 32 are oriented relative to one another with respect to the longitudinal axis 26, that is to say brought into an aligned rotational angle position. Then, for example, the gearbox cover 20 is moved towards the main body 16 in the joining direction 28.

What occurs here first of all, where appropriate, is that the bevels 46 of the two first latching elements 31, 32, for centring between the gearbox cover 20 and the main body 16, come into contact with the bearing faces 52 of the second latching elements 49, 50. Then, the cross-web 41 comes into operative connection with the run-on slopes 51 of the second latching elements 49, 50, with the result that the first latching elements 36, 37 are elastically deformed in a direction extending perpendicularly to the longitudinal axis 26. Upon reaching the axial end position of the gearbox cover 20 with respect to the direction of the longitudinal axis 26, the latching connections 30, 31 and 32 are formed by the first latching elements 36, 37 and 58 passing into the cutouts 42 and 63 and thereby fixing the gearbox cover 20 on the main body 16.

The wiper motor 10 described so far may be altered or modified in a wide variety of ways without departing from the scope of the invention as defined in the appended claims.

### Reference designations

- 10: Wiper motor
- 12: Gearbox housing
- 14: Motor housing
- 16: Main body
- 18: Opening
- 20: Gearbox cover
- 22: Receiving space
- 24: Output shaft
- 26: Longitudinal axis
- 28: Joining direction
- 30: First latching connection
- 31: First latching connection
- 32: Second latching connection
- 33: Rotational angle region
- 34: Rotational angle region
- 36: First latching element
- 37: First latching element
- 38: Web
- 39: Web
- 41: Cross-web
- 42: Cutout
- 44: Guide face
- 46: Bevel
- 48: Bearing face
- 49: Second latching element
- 50: Second latching element
- 51: Run-on slope
- 52: Bearing face
- 53: Gap
- 55: Centring means
- 56: Plane
- 57: Plane
- 58: Latching element
- 60: Latching element
- 61: Gap
- 62: Gap
- 63: Cutout
- 64: Arrow

- B: Inner width
- b: Outer width

- α: Angle

## Claims

1. Wiper motor (10), having a gearbox housing (12) which comprises a preferably pot-shaped main body (16) for forming a receiving space (22) for a gear mechanism, wherein an opening (18) in the main body (16) can be closed by a gearbox cover (20), wherein a plurality of latching connections (30, 31, 32), which act in the direction of a joining direction (28) between the main body (16) and the gearbox cover (20), are formed between the main body (16) and the gearbox cover (20) and each comprise an elastically deformable first latching element (36, 37, 58) and a second latching element (49, 50, 60) which interacts with the first latching element (36, 37, 58) in a form-fitting manner, and wherein centring means (55) are provided on the gearbox housing (12) for the rotational angle play-free positioning of the gearbox cover (20) relative to the main body (16) about a longitudinal axis (26) of the gearbox housing (12),
the centering means (55) being formed on two latching connections (30, 31), in that the centring means (55) on each of the two latching connections (30, 31) are formed by in each case a first bearing face (48) on the first latching element (36, 37) and a second bearing face (52) on the second latching element (49, 50), in that the first bearing faces (48) and the second bearing faces (52) bear against one another in a play-free manner in the joined state between the main body (16) and the gearbox cover (20), and in that the first bearing faces (48) and the second bearing faces (52), as viewed with respect to a direction of rotation about the longitudinal axis (26), are in each case arranged on the same side of the first latching elements (36, 37) and of the second latching elements (49, 50),
**characterized in that** the first latching element (36, 37) comprises two webs (38, 39) which are connected to one another by a cross-web (41) and which delimit a rectangular cutout (42) into which the second latching element (49, 50) projects in the joined state of the gearbox housing (12), a guide face (44) being formed by an extension of the first bearing face (48) disposed externally with respect to the cutout (42).

2. Wiper motor according to Claim 1,
**characterized**
**in that** the latching connections (30, 31) serving to form the centring means (55) are arranged at opposite rotational angle regions (33, 34) with respect to the longitudinal axis (26), which extends parallel to the joining direction (28), of the gearbox housing (12).

3. Wiper motor according to any one of the preceding Claims,
**characterized**
**in that** the second latching element (49, 50) comprises a run-on slope (51) against which the first latching element (36, 37) bears during the joining operation of the gearbox housing (12) and is thereby elastically deformed.

4. Wiper motor according to any one of the preceding Claims,
**characterized**
**in that** the guide face (44) comprises a lateral bevel (46) for interacting with the second bearing face (52) on the second latching element (49, 50).

5. Wiper motor according to any one of Claims 1 to 4,
**characterized**
**in that** at least one additional latching connection (32) between the main body (16) and the gearbox cover (20) is provided, and in that the at least one additional latching connection (32), in the joined state of the gearbox housing (12), has a rotational angle play with respect to a plane extending perpendicularly to the joining direction (28).

6. Wiper motor according to any one of Claims 1 to 5,
**characterized**
**in that** the first latching element (36, 37) is arranged on the gearbox cover (20), and the second latching element (49, 50) is arranged on the main body (16).

7. Wiper motor according to any one of Claims 1 to 6,
**characterized**
**in that** the gearbox cover (20) consists of plastic.

8. Wiper motor according to any one of Claims 3 to 7,
**characterized**
**in that** the cutout (42) has a first width (B) which is greater than a second width (b) of the second latching element (49, 50) within the cutout (42), with the result that, in the joined state of the gearbox housing (12), a gap (53) is formed between the cutout (42) and the second latching element (49, 50) on the side facing away from the bearing faces (48, 52).

## Patentansprüche

1. Wischermotor (10), mit einem Getriebegehäuse (12), das einen vorzugsweise topfförmigen Hauptkörper (16) zur Bildung eines Aufnahmeraums (22) für ein Getriebe umfasst, wobei eine Öffnung (18) im Hauptkörper (16) durch einen Getriebedeckel (20) verschließbar ist, wobei zwischen dem Hauptkörper (16) und dem Getriebedeckel (20) mehrere Rastverbindungen (30, 31, 32) ausgebildet sind, die in Richtung einer Fügerichtung (28) zwischen dem Hauptkörper (16) und dem Getriebedeckel (20) wirken und jeweils ein elastisch verformbares erstes Rastelement (36, 37, 58) und ein zweites Rastelement (49, 50, 60) umfassen, das mit dem ersten Rastelement (36, 37, 58) formschlüssig zusammenwirkt, und wobei am Getriebegehäuse (12) Zentriermittel (55) zur drehwinkelspielfreien Positionierung des Getriebedeckels (20) relativ zum Hauptkörper (16) um eine Längsachse (26) des Getriebegehäuses (12) vorgesehen sind,
wobei die Zentriermittel (55) an zwei Rastverbindungen (30, 31) ausgebildet sind, indem die Zentriermittel (55) an jeder der beiden Rastverbindungen (30, 31) durch jeweils eine erste Anlagefläche (48) am ersten Rastelement (36, 37) und eine zweite Anlagefläche (52) am zweiten Rastelement (49, 50) gebildet sind, indem die ersten Anlageflächen (48) und die zweiten Anlageflächen (52) im gefügten Zustand zwischen dem Hauptkörper (16) und dem Getriebedeckel (20) spielfrei aneinander anliegen, und indem die ersten Anlageflächen (48) und die zweiten Anlageflächen (52), bezogen auf eine Drehrichtung um die Längsachse (26), jeweils auf derselben Seite der ersten Rastelemente (36, 37) und der zweiten Rastelemente (49, 50) angeordnet sind, **dadurch gekennzeichnet, dass** das erste Rastelement (36, 37) zwei Stege (38, 39) umfasst, die durch einen Quersteg (41) miteinander verbunden sind und die einen rechteckigen Ausschnitt (42) begrenzen, in den das zweite Rastelement (49, 50) im gefügten Zustand des Getriebegehäuses (12) hineinragt, wobei eine Führungsfläche (44) durch eine Verlängerung der ersten Anlagefläche (48) gebildet ist, die bezüglich des Ausschnitts (42) außen angeordnet ist.

2. Wischermotor nach Anspruch 1, **dadurch gekennzeichnet, dass** die zur Bildung der Zentriermittel (55) dienenden Rastverbindungen (30, 31) in bezüglich der Längsachse (26), die parallel zur Fügerichtung (28) verläuft, des Getriebegehäuses (12) gegenüberliegenden Drehwinkelbereichen (33, 34) angeordnet sind.

3. Wischermotor nach einem der vorhergehenden Ansprüche, **dadurch gekennzeichnet, dass** das zweite Rastelement (49, 50) eine Auflaufschräge (51) aufweist, an der das erste Rastelement (36, 37) während des Fügevorgangs des Getriebegehäuses (12) anliegt und dadurch elastisch verformt wird.

4. Wischermotor nach einem der vorhergehenden Ansprüche, **dadurch gekennzeichnet, dass** die Führungsfläche (44) eine seitliche Abschrägung (46) zum Zusammenwirken mit der zweiten Anlagefläche (52) am zweiten Rastelement (49, 50) aufweist.

5. Wischermotor nach einem der Ansprüche 1 bis 4, **dadurch gekennzeichnet, dass** mindestens eine zusätzliche Rastverbindung (32) zwischen dem Hauptkörper (16) und dem Getriebedeckel (20) vorgesehen ist, und dass die mindestens eine zusätzliche Rastverbindung (32) im gefügten Zustand des Getriebegehäuses (12) ein Drehwinkelspiel bezüglich einer senkrecht zur Fügerichtung (28) verlaufenden Ebene aufweist.

6. Wischermotor nach einem der Ansprüche 1 bis 5, **dadurch gekennzeichnet, dass** das erste Rastelement (36, 37) am Getriebedeckel (20) und das zweite Rastelement (49, 50) am Hauptkörper (16) angeordnet ist.

7. Wischermotor nach einem der Ansprüche 1 bis 6, **dadurch gekennzeichnet, dass** der Getriebedeckel (20) aus Kunststoff besteht.

8. Wischermotor nach einem der Ansprüche 3 bis 7, **dadurch gekennzeichnet, dass** der Ausschnitt (42) eine erste Breite (B) aufweist, die größer ist als eine zweite Breite (b) des zweiten Rastelements (49, 50) innerhalb des Ausschnitts (42), sodass im gefügten Zustand des Getriebegehäuses (12) ein Spalt (53) zwischen dem Ausschnitt (42) und dem zweiten Rastelement (49, 50) auf der von den Anlageflächen (48, 52) abgewandten Seite gebildet ist.

## Revendications

1. Moteur d'essuie-glace (10), comportant un boîtier de réducteur (12) qui comprend un corps principal (16) de préférence en forme de pot pour former un espace de réception (22) pour un mécanisme d'engrenage, dans lequel une ouverture (18) dans le corps principal (16) peut être fermée par un couvercle de réducteur (20), dans lequel une pluralité de connexions d'enclenchement (30, 31, 32), qui agissent dans la direction d'une direction d'assemblage (28) entre le corps principal (16) et le couvercle de réducteur (20), sont formées entre le corps principal (16) et le couvercle de réducteur (20) et comprennent chacune un premier élément d'enclenchement (36, 37, 58) élastiquement déformable et un second élément d'enclenchement (49, 50, 60) qui interagit avec le premier élément d'enclenchement (36, 37, 58) de manière complémentaire, et dans lequel des moyens de centrage (55) sont prévus sur le boîtier de réducteur (12) pour le positionnement sans jeu angulaire de rotation du couvercle de réducteur (20) par rapport au corps principal (16) autour d'un axe longitudinal (26) du boîtier de réducteur (12),
les moyens de centrage (55) étant formés sur deux connexions d'enclenchement (30, 31), en ce que les moyens de centrage (55) sur chacune des deux connexions d'enclenchement (30, 31) sont formés par dans chaque cas une première surface d'appui (48) sur le premier élément d'enclenchement (36, 37) et une seconde surface d'appui (52) sur le second élément d'enclenchement (49, 50), en ce que les premières surfaces d'appui (48) et les secondes surfaces d'appui (52) s'appuient l'une contre l'autre de manière sans jeu dans l'état assemblé entre le corps principal (16) et le couvercle de réducteur (20), et en ce que les premières surfaces d'appui (48) et les secondes surfaces d'appui (52), vues par rapport à une direction de rotation autour de l'axe longitudinal (26), sont dans chaque cas disposées du même côté des premiers éléments d'enclenchement (36, 37) et des seconds éléments d'enclenchement (49, 50), **caractérisé en ce que** le premier élément d'enclenchement (36, 37) comprend deux nervures (38, 39) qui sont reliées l'une à l'autre par une nervure transversale (41) et qui délimitent une découpe rectangulaire (42) dans laquelle le second élément d'enclenchement (49, 50) fait saillie dans l'état assemblé du boîtier de réducteur (12), une surface de guidage (44) étant formée par une extension de la première surface d'appui (48) disposée à l'extérieur par rapport à la découpe (42).

2. Moteur d'essuie-glace selon la revendication 1, **caractérisé en ce que** les connexions d'enclenchement (30, 31) servant à former les moyens de centrage (55) sont disposées dans des régions d'angle de rotation opposées (33, 34) par rapport à l'axe longitudinal (26), qui s'étend parallèlement à la direction d'assemblage (28), du boîtier de réducteur (12).

3. Moteur d'essuie-glace selon l'une quelconque des revendications précédentes, **caractérisé en ce que** le second élément d'enclenchement (49, 50) comprend une pente d'engagement (51) contre laquelle le premier élément d'enclenchement (36, 37) s'appuie pendant l'opération d'assemblage du boîtier de réducteur (12) et est ainsi élastiquement déformé.

4. Moteur d'essuie-glace selon l'une quelconque des revendications précédentes, **caractérisé en ce que** la surface de guidage (44) comprend un biseau latéral (46) pour interagir avec la seconde surface d'appui (52) sur le second élément d'enclenchement (49, 50).

5. Moteur d'essuie-glace selon l'une quelconque des revendications 1 à 4, **caractérisé en ce qu'**au moins une connexion d'enclenchement supplémentaire (32) entre le corps principal (16) et le couvercle de réducteur (20) est prévue, et **en ce que** la au moins une connexion d'enclenchement supplémentaire (32), dans l'état assemblé du boîtier de réducteur (12), présente un jeu d'angle de rotation par rapport à un plan s'étendant perpendiculairement à la direction d'assemblage (28).

6. Moteur d'essuie-glace selon l'une quelconque des revendications 1 à 5, **caractérisé en ce que** le premier élément d'enclenchement (36, 37) est disposé sur le couvercle de réducteur (20), et le second élément d'enclenchement (49, 50) est disposé sur le corps principal (16).

7. Moteur d'essuie-glace selon l'une quelconque des revendications 1 à 6, **caractérisé en ce que** le couvercle de réducteur (20) est constitué de plastique.

8. Moteur d'essuie-glace selon l'une quelconque des revendications 3 à 7, **caractérisé en ce que** la découpe (42) a une première largeur (B) qui est supérieure à une seconde largeur (b) du second élément d'enclenchement (49, 50) à l'intérieur de la découpe (42), de sorte que, dans l'état assemblé du boîtier de réducteur (12), un espace (53) est formé entre la découpe (42) et le second élément d'enclenchement (49, 50) sur le côté opposé aux surfaces d'appui (48, 52).
